# EUROPÄISCHE PATENTSCHRIFT

(11) **EP 2 128 465 B1**
(45) Veröffentlichungstag und Bekanntmachung des Hinweises auf die Patenterteilung: **06.07.2011**
(21) Anmeldenummer: 08008926.1
(22) Anmeldetag: 14.05.2008
(51) Int. Cl.: F16C 33/32, F16C 33/34, F16C 33/36, F16C 33/66

(54) **Wälzlager, Wälzkörper für Wälzlager und Gerät mit Wälzlager**
Roller bearing, roller body for roller bearing and device with roller body
Palier à roulement, élément roulant pour palier à roulement et appareil doté d'un palier à roulement

(43) Veröffentlichungstag der Anmeldung: 02.12.2009
(73) Patentinhaber: SIEMENS AKTIENGESELLSCHAFT, 80333 München (DE)
(72) Erfinder: Gebert, Karl, Dr., 97424 Schweinfurt (DE)

(56) Entgegenhaltungen:
- DE-A1-102006 050 122
- US-A1- 2003 158 047
- US-A1- 2004 240 763

## Beschreibung

Die Erfindung betrifft ein Wälzlager nach dem Oberbegriff von Patentanspruch 1. Sie betrifft auch einen bei dem Wälzlager einsetzbaren Wälzkörper sowie ein Gerät, bei dem das Wälzlager verwendet ist.

Es geht vorliegend um ein so genanntes Hybrid-Wälzlager. Hierbei bestehen der Außenring und der Innenring des Wälzlagers aus Metall, insbesondere Stahl, während die Wälzkörper aus einem Material bestehen, welches Keramik umfasst. Bisher bestehen die Wälzkörper vollständig aus Keramik, z. B. aus Siliziumnitrid.

Derartige Hybrid-Wälzlager sind insbesondere für Anwendungen geeignet, bei denen sich einer der Ringe mit hohen Drehzahlen gegenüber dem anderen Ring drehen soll. Das Keramikmaterial hat besondere Vorteile, weil es bessere Abrolleigenschaften der Wälzkörper bei Schmierstoffmangel bewirkt, so dass die Wälzkörper einem geringeren Verschleiß unterliegen. Insbesondere, wenn der Innenring gegen den Außenring vorgespannt ist und die Wälzkörper an Schultern der beiden Ringe bei hohen Drehzahlen entlanglaufen, unterliegen die Wälzkörper besonders hohen Fliehkräften. Dies ist bei Anwendungen der genannten Wälzlager in Werkzeugmaschinen und anderen Maschinen, bei denen ein bewegliches Teil mit hohen Drehzahlen gegenüber einem ortfesten Teil bewegt wird, der Fall. Da Keramikwälzkörper nur ein Drittel des spezifischen Gewichts von bei anderen Wälzlagern verwendeten Stahlkugeln haben, unterliegen die Wälzkörper nicht einer so hohen Fliehkraft, wie es Stahlkugeln tun.

Die Hybrid-Wälzlager weisen jedoch auch Nachteile auf. Keramikkörper sind als Isolatoren schlechte elektrische und damit auch schlechte thermische Leiter.

Bei Wälzlagern, bei denen sämtliche Bauteile aus Stahl bestehen, kann die Schmierfilmdicke auf elektrischem Wege ermittelt werden. Der durch das notwendige Schmiermittel bereitgestellte Schmierfilm stellt eine Isolationsschicht für eine elektrische Kapazität dar, und er wirkt gleichzeitig als parallel zu der Kapazität bereitgestelltes Widerstandselement. Durch Kapazitätsmessung kann auf die Schmierfilmdicke zurückgeschlossen werden. Hierzu wird ein Strom, typischerweise ein Wechselstrom, über den Außenring, den Schmierfilm zwischen Außenring und Wälzkörper, den Wälzkörper, den Schmierfilm zwischen Wälzkörper und Innenring und den Innenring gesandt und die abfallende Spannung gemessen. Die Schmierfilmdicke gibt nun Auskunft über die Qualität der Schmierung, welche Einfluss auf den Laufbahn- und Komponentenverschleiß im Wälzlager hat, d. h. Auskunft darüber, wie belastet das Wälzlager ist, so dass auf den Zustand des gesamten Wälzlagers geschlossen werden kann. Der Betrieb des Wälzlagers kann bei nicht ausreichender Schmierfilmdicke unterbrochen werden und gegebenenfalls Schmiermittel zugeführt werden. Häufig erfolgt die Schmierfilmdickemessung kontinuierlich, damit das Lager möglichst nicht in eine Situation gebracht wird, in der es starkem Verschleiß unterliegt.

Da die Siliziumnitrid-Wälzlager nicht elektrisch leitend sind, ist bisher das Messen der Schmierfilmdicke in einem Hybrid-Wälzlager, also einem Wälzlager nach dem Oberbegriff von Patentanspruch 1 nicht möglich.

Es ist Aufgabe der Erfindung, die Messung der Schmierfilmdicke auch in einem Hybrid-Wälzlager zu ermöglichen.

Die Aufgabe wird dadurch gelöst, dass solche Wälzkörper verwendet werden, bei denen in das Keramikmaterial Kohlenstoffnanoröhren und/oder Kohlenstoffnanofasern eingebettet sind. Dies lässt sich auch als "Dotierung" des Keramikmaterials verstehen. Kohlenstoffnanoröhren sind gemäß Wikipedia, der freien Enzyklopädie in der Fassung vom 19. Februar 2008 mikroskopisch kleine röhrenförmige Gebilde (molekulare Nanoröhren) aus Kohlenstoff, die auch als CNT (carbon nanotubes) bezeichnet werden. Kohlenstoffnanoröhren sind elektrisch leitfähig, und bei Verwendung derartiger Kohlenstoffnanoröhren im Keramikmaterial kann diesem elektrische Leitfähigkeit verliehen werden. Bei Bereitstellung einer ausreichenden Menge von Kohlenstoffnanoröhren oder auch Kohlenstoffnanofasern können die Wälzkörper zumindest 1/2000stel und leicht auch zumindest 1/1000stel der elektrischen Leitfähigkeit von Kupfer erreichen. Es kann sogar bis zu einem 100stel der elektrischen Leitfähigkeit von Kupfer erreicht werden. Eine Leitfähigkeit in den genannten Größenordnungen genügt, um eine Schmierfilmdickenmessung an dem Wälzlager durchführen zu können.

Bevorzugte Anwendung ist eine solche bei Wälzkörpern aus Siliziumnitrid, die besonders vorteilhafte Eigenschaften für die in Rede stehenden Wälzlager haben.

Erfindungsgemäß wird auch ein Wälzkörper für ein Wälzlager bereitgestellt, der aus Keramikmaterial besteht, in das Kohlenstoffnanoröhren und/oder Kohlenstoffnanofasern eingebettet sind, wobei das Keramikmaterial auch hier wiederum bevorzugt Siliziumnitrid ist.

Die Erfindung stellt auch ein Gerät mit einem ortsfesten und einem beweglichen Teil bereit, wobei das bewegliche Teil über zumindest ein Wälzlager der erfindungsgemäßen Art gegenüber dem ortsfesten Teil gelagert ist.

Eine bevorzugte Anwendung ist hierbei, z.B. wenn das Gerät eine Werkzeugmaschine oder eine Spindelmaschine ist, dass der Innenring des Wälzlagers gegen den Außenring vorgespannt ist. Hierbei stützt sich eine Feder an dem beweglichen Teil ab und drückt den Innenring über den Wälzkörper gegen den Außenring.

Da Ziel der Erfindung ist, die Dicke eines Schmierfilms zu messen, ist das erfindungsgemäße Gerät bevorzugt mit Mitteln zum Messen eines von der Dicke eines Schmierfilms von Schmiermittel in dem Wälzlager abhängigen Signals ausgelegt.

Die Mittel zum Messen umfassen typischerweise eine Stromquelle und ein Spannungsmessgerät: Das Wälzlager wird mit Strom beaufschlagt und die daran abfallende Spannung gemessen. Bevorzugt erfolgt die Schmierfilmdickenmessung ständig während des Betriebs des Geräts. Hierbei ist es bekannt, die Messung dadurch zu stabilisieren, dass ein Wechselstrom mit einer wechselnden Frequenz bereitgestellt wird und die hierbei entstehende Spannung spezifisch gemessen wird.

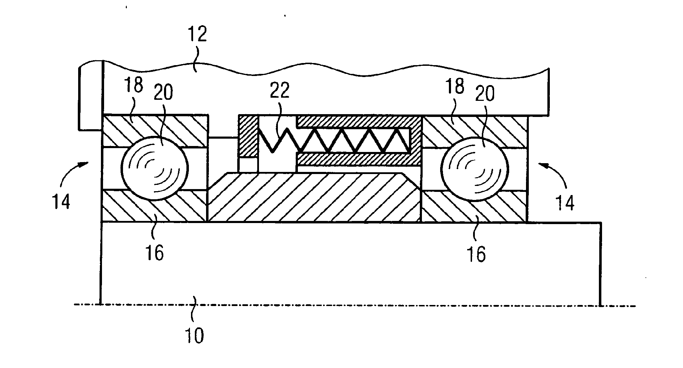

Nachfolgend wird eine bevorzugte Ausführungsform der Erfindung unter Bezug auf die Zeichnung beschrieben, wobei
- FIG 1: eine Anordnung mit zwei Wälzlagern zeigt, bei denen die Erfindung einsetzbar ist.

Gegenüber einem ortsfesten Gehäuse 12 soll ein bewegliches Teil 10 bewegt werden und wird hierbei über Wälzlager 14 gegenüber diesem Gehäuse 12 gelagert. Die Wälzlager 14 umfassen jeweils einen Außenring 18 und einen Innenring 16, zwischen denen ein Wälzkörper, vorliegend eine Kugel 20 angeordnet ist. Das Wälzlager 14 ist vorliegend angestellt, d. h. es ist eine Feder 22 bereitgestellt, welche sich an dem feststehenden Teil 12 abstützt und Druck auf den Außenring 18 ausübt, der diesen über den Wälzkörper 20 an den Innenring 16 weitergibt.

Bei Wälzlagern nach Art der Wälzlager 14, die typischerweise in Werkzeugmaschinen und anderen Geräten eingesetzt werden, bei denen das bewegliche Teil 10 mit extrem hohen Drehzahlen gedreht wird, sind Außenring 18 und Innenring 16 aus Stahl hergestellt und die Wälzkörper aus Keramikmaterial. In dieses Keramikmaterial sind vorliegend Kohlenstoffnanoröhren und/ oder Kohlenstoffnanofasern eingebettet, die bewirken, dass die Wälzkörper 20 elektrisch leitfähig werden.

Damit ist es möglich, die Dicke eines in FIG 1 nicht gezeigten Schmierfilms zwischen Wälzkörper 20 und Innenring 16 bzw. Wälzkörper 20 und Außenring 18 zu messen und gegebenenfalls nachzuschmieren oder den Betrieb des Geräts zu beenden.

Die elektrische Leitfähigkeit der Wälzkörper 20 geht auch mit einer erhöhten thermischen Leitfähigkeit einher. Bei schnelldrehenden Wälzlagern heizen sich insbesondere die Innenringe 16 stark auf. Bei herkömmlichen Hybridlagern können Temperaturdifferenzen zu dem Außenring 18 von bis zu 40° entstehen, die den Betrieb des Geräts beeinträchtigen, so dass gegebenenfalls die maximal mögliche Drehzahl reduziert werden muss oder eine Kühlung des Innenrings 16 bzw. des beweglichen Teils 10 vorgesehen werden muss. Eine solche aufwändige Kühlung ist vorliegend nicht erforderlich, weil durch die bessere thermische Leitfähigkeit der Wälzkörper 20 die Wärme in ausreichendem Maße abgeführt wird.

Somit wird der Einsatzbereich von Wälzlagern erweitert und bei extremen Einsatzbereichen wie bei Geräten, bei denen mit hohen Drehzahlen gedreht wird, die Lebensdauer der Wälzlager erhöht.

## Patentansprüche

1. Wälzlager (14) mit einem Außenring (18) und einem Innenring (16), die jeweils aus Metall bestehen, und mit zumindest einem Wälzkörper (20), der aus einem Material besteht, welches Keramik umfasst, **dadurch gekennzeichnet, dass** in das Keramikmaterial der Wälzkörper (20) Kohlenstoffnanoröhren und/oder Kohlenstoffnanofasern eingebettet sind.

2. Wälzlager (14) nach Anspruch 1, **dadurch gekennzeichnet, dass** die Wälzkörper (20) aus Material bestehen, das Siliziumnitrid umfasst.

3. Wälzkörper (20) für ein Wälzlager (14), wobei der Wälzkörper (20) aus Keramikmaterial besteht, in das Kohlenstoffnanoröhren und/oder Kohlenstoffnanofasern eingebettet sind.

4. Wälzkörper (20) nach Anspruch 3, **dadurch gekennzeichnet, dass** das Keramikmaterial Siliziumnitrid ist.

5. Gerät mit einem ortsfesten Teil (12) und einem beweglichen Teil (10), wobei das bewegliche Teil (10) über zumindest ein Wälzlager (14) nach Anspruch 1 oder 2 gegenüber dem ortsfesten Teil (12) gelagert ist.

6. Gerät nach Anspruch 5, **dadurch gekennzeichnet, dass** der Innenring (16) des Wälzlagers (14) gegen den Außenring (18) vorgespannt ist.

7. Gerät nach Anspruch 5 oder 6, mit Mitteln zum Messen eines von der Dicke eines Schmierfilms von Schmiermittel in dem Wälzlager (14) abhängigen Signals.

## Claims

1. Roller bearing (14) having an outer ring (18) and an inner ring (16), which are each composed of metal, and having at least one roller body (20) which is composed of a material which comprises ceramic, **characterized in that** carbon nanotubes and/or carbon nanofibers are embedded in the ceramic material of the roller bodies (20).

2. Roller bearing (14) according to Claim 1, **characterized in that** the roller bodies (20) are composed of material which comprises silicon nitride.

3. Roller body (20) for a roller bearing (14), with the roller body (20) being composed of ceramic material in which carbon nanotubes and/or carbon nanofibers are embedded.

4. Roller body (20) according to Claim 3, **characterized in that** the ceramic material is silicon nitride.

5. Appliance having a stationary part (12) and a moving part (10), with the moving part (10) being borne via at least one roller bearing (14) according to Claim 1 or 2 with respect to the stationary part (12).

6. Appliance according to Claim 5, **characterized in that** the inner ring (16) of the roller bearing (14) is prestressed with respect to the outer ring (18).

7. Appliance according to Claim 5 or 6, having means for measurement of a signal which is dependent on the thickness of a lubricating film of lubricant in the roller bearing (14).

## Revendications

1. Palier 14 à roulement, comprenant une bague 18 ) extérieure et une bague 16 ) intérieure, qui sont respectivement en métal, et au moins un corps (20) de roulement, qui est en un matériau qui comprend de la céramique, **caractérisé en ce que** dans le matériau en céramique du corps ( 20 ) de roulement sont incorporées des nanofibres de carbone.

2. Palier (14) à roulement suivant la revendication 1, **caractérisé en ce que** le corps ( 20 ) de roulement comprend du nitrure de silicium.

3. Corps ( 20 ) de roulement pour un palier ( 14 ) à roulement, dans lequel le corps ( 20 ) de roulement est en un matériau céramique, dans lequel des nanotubes de carbone et/ou des nanofibres de carbone sont incorporés.

4. Corps (20) de roulement suivant la revendication 3, **caractérisé en ce que** le matériau en céramique est du nitrure de silicium.

5. Appareil ayant une partie ( 12 ) fixe et une partie ( 10 ) mobile, la partie ( 10 ) mobile étant montée par rapport à la partie ( 2 ) fixe par au moins un palier ( 14 ) à roulement suivant la revendication 1 ou 2.

6. Appareil suivant la revendication 5, **caractérisé en ce que** la bague ( 16 ) intérieure du palier ( 14 ) de roulement est précontrainte par rapport à la bague ( 18 ) extérieure.

7. Appareil suivant la revendication 5 ou 6, comprenant des moyens de mesure d'un signal qui dépend de l'épaisseur d'un film d'agent lubrifiant dans le palier ( 14 ) de roulement.
